# EUROPÄISCHE PATENTSCHRIFT

(11) **EP 0 918 815 B1**
(45) Veröffentlichungstag und Bekanntmachung des Hinweises auf die Patenterteilung: **28.04.2004**
(21) Anmeldenummer: 98927997.1
(22) Anmeldetag: 16.06.1998
(51) Int. Cl.: C08K 3/00, C08K 5/00, C08L 1/02, D01F 2/00, D01F 1/04, D01F 1/10, C08J 5/18

(54) **ZUSAMMENSETZUNG ENTHALTEND FEINE FESTSTOFFTEILCHEN**
COMPOSITION CONTAINING FINE SOLID PARTICLES
COMPOSITION CONTENANT DE FINES PARTICULES SOLIDES

(30) Priorität: 16.06.1997 AT 104197
(43) Veröffentlichungstag der Anmeldung: 02.06.1999
(73) Patentinhaber: LENZING AKTIENGESELLSCHAFT, 4860 Lenzing (AT)
(72) Erfinder: RÜF, Hartmut, A-4840 Vöcklabruck (AT)
(74) Vertreter: Schwarz, Albin, Dr.
(86) Internationale Anmeldenummer: PCT/AT1998/000147
(87) Internationale Veröffentlichungsnummer: WO 1998/058015

(56) Entgegenhaltungen:
- WO-A-83/04415
- WO-A-96/27638
- WO-A-97/02315
- DD-A- 218 104

## Beschreibung

Die vorliegende Erfindung betrifft eine Zusammensetzung, welche feine Feststoffteilchen enthält, zur Zumischung zu einer formbaren Lösung von Cellulose in einem wässerigen tertiären Aminoxid.

Aus der US-PS 2,179,181 ist bekannt, daß tertiäre Aminoxide Cellulose zu lösen vermögen und daß aus diesen Lösungen durch Fällung cellulosische Formkörper wie Fasern gewonnen werden können (Aminoxidverfahren). Ein Verfahren zur Herstellung derartiger Lösungen ist beispielsweise aus der EP-A - 0 356 419 bekannt. Gemäß dieser Veröffentlichung wird zunächst eine Suspension von Cellulose in einem wässerigen tertiären Aminoxid bereitet. Das Aminoxid enthält bis zu 40 Masse-% Wasser. Die wässerige Cellulosesuspension wird erhitzt und unter Druckverminderung wird so lange Wasser abgezogen, bis die Cellulose in Lösung geht.

Aus der DE-A - 28 44 163 ist bekannt, zur Herstellung von Cellulosefasern zwischen Spinndüse und Fällbad eine Luftstrecke bzw. einen Luftspalt zu legen, um einen Düsenverzug zu erreichen. Dieser Düsenverzug ist notwendig, da nach Kontakt der geformten Spinnlösung mit dem wässerigen Fällbad eine Reckung der Fäden sehr erschwert wird. Im Fällbad wird die im Luftspalt eingestellte Faserstruktur fixiert.

Ein Verfahren zur Herstellung cellulosischer Fäden ist weiters aus der DE-A - 28 30 685 bekannt, wonach eine Lösung von Cellulose in einem tertiären Aminoxid in warmem Zustand zu Filamenten geformt wird, die Filamente mit Luft abgekühlt und anschließend in ein Fällbad eingebracht werden, um die gelöste Cellulose zu fällen. Die Oberfläche der versponnenen Fäden wird weiters mit Wasser benetzt, um ihre Neigung, an benachbarten Fäden anzukleben, zu vermindern.

Eine Vorrichtung und ein Verfahren zur Herstellung von nahtlosen Schlauchfolien ist aus der WO 93/13670 bekannt. Gemäß diesem bekannten Verfahren wird die Celluloselösung durch eine Extrusionsdüse mit ringförmigem Extrusionsspalt zu einem Schlauch geformt, der über einen zylindrischen Dorn gezogen und in das Fällbad eingebracht wird. Damit der extrudierte Schlauch nicht an der Dornoberfläche haften bleibt, wird seine Oberfläche mit einem Wasserfilm überzogen, sodaß die Innenseite des Schlauches koaguliert und über den zylindrischen Dorn gleitet. Die erhaltenen Schlauchfolien weisen Naßfestigkeiten von etwa 10 bis 30 N/mm² auf.

Auch die WO 95/07811 beschreibt eine Vorrichtung und ein Verfahren zur Herstellung cellulosischer Schlauchfolien.

Es ist bekannt, Fasern und Folien herzustellen, welche Additive zur Modifikation und Verbesserung ihrer Eigenschaften enthalten. So werden beispielsweise derartige Additive zugegeben, um die Produkte zu mattieren, zu färben, flammhemmend und lichtstabil zu machen, oder um sie optisch aufzuhellen. Diese Additive werden bei synthetischen Kunststoffen gewöhnlich vor der Polymerisation zugegeben. Es ist auch bekannt, die Additive als sogenannter "Masterbatch" in Form eines Pulvers oder als Dispersion mittels eines Extruders zuzugeben.

Die WO 93/12173 beschreibt den Einsatz von Flammschutzmitteln in Kunstfasern und Polyurethanschaum. Dieser Literatur ist jedoch nicht zu entnehmen, auf welche Weise diese Flammschutzmittel in die Fasern eingebracht werden.

Die WO 94/20653 beschreibt Fasern aus Regeneratcellulose, welche hohle Kügelchen mit einem Durchmesser von 0,1 bis 1,5 µm als Alternative zu Titandioxid aufweisen. Die Kügelchen sind aus einem Material, z.B. aus Styrol/Acrylsäure-Copolymer, welches mit der Spinnmasse nicht reagiert. Dieses Copolymer wird als Aufschlämmung in Wasser, wobei das Copolymer nur zu 10% enthalten ist, einer viskose zugegeben, welche anschließend filtriert und dann zu Fasern versponnen wird. Es wird ausdrücklich empfohlen, die wässerige Aufschlämmung in mit Wasser verdünnter Form und nicht in konzentrierter Form der Viskose zuzugeben.

In der WO 96/27638 wird ein Verfahren zur Herstellung einer Zusammensetzung beschrieben, die ein Additiv in Form feiner fester Teilchen enthält, welche mit einer Umhüllung versehen oder in einer Matrix dispergiert sind. Diese Zusammensetzung wird hergestellt, indem die festen Teilchen in einer erwärmten Lösung von Cellulose in einem wässerigen tertiären Aminoxid homogen dispergiert werden. Die erhaltene Dispersion kann in erwärmtem Zustand der Spinnmasse zugeführt werden. Die zur Herstellung der Dispersion verwendete Lösung muß genügend Cellulose enthalten, um beim Dispergieren den festen Teilchen mindestens eine monomolekulare Schicht an Cellulose auf der ganzen Oberfläche zu verleihen. Es wird ferner empfohlen, den Cellulosegehalt so zu bemessen, daß eine mehrfach molekulare Schicht die dispergierten Teilchen jeweils umhüllt.

Dieses Verfahren hat jedoch den Nachteil, daß sich auf Verwendungstemperatur erhitzte Dispersionen auf Basis eines tertiären Aminoxids, welche zusätzlich Cellulose enthalten, aufgrund von Abbaureaktionen, die an der Cellulose stattfinden, verfärben. Dies bedeutet, daß derartige Dispersionen nicht lagerstabil sind und Verunreinigungen (Abbauprodukte der Cellulose) in die Spinnmasse und damit in die cellulosischen Endprodukte einbringen.

Die Erfindung stellt sich zur Aufgabe, diese Nachteile zu überwinden und eine Zusammensetzung zur Verfügung zu stellen, welche ein Additiv enthält und einer formbaren Celluloselösung zugegeben werden kann, um die Eigenschaften der aus der Celluloselösung hergestellten Formkörper zu modifizieren.

Diese Aufgabe wird mit einer Zusammensetzung zur Zumischung zu einer formbaren Lösung von Cellulose in einem wässerigen tertiären Aminoxid gelöst, welche Zusammensetzung aus
- festen Teilchen,
- einem Gemisch aus einem tertiären Aminoxid und Wasser, in welchem die festen Teilchen (=Additiv) dispergiert sind,
- einem Stabilisator für das tertiäre Aminoxid und
- gegebenenfalls einem weiteren Stoff
besteht, mit der Maßgabe, daß die festen Teilchen und dieser gegebenenfalls eine weitere Stoff nicht Cellulose sind, und daß der Gehalt an Wasser derart ist, daß bei Zumischung der Zusammensetzung zur formbaren Celluloselösung (Spinnmasse) keine Cellulose ausfällt.

Es hat sich gezeigt, daß es nicht erforderlich ist, auf den festen Teilchen eine mindestens monomolekulare Schicht aus Cellulose abzuscheiden, um die Zusammensetzung homogen in der Spinnmasse verteilen zu können. Dies vereinfacht nicht nur die Herstellung der Zusammensetzung, sondern verbessert auch die Qualität der hergestellten Formkörper. Darüberhinaus ist die erfindungsgemäße Additiv-Zusammensetzung in einem höheren Maß lagerstabil, als die Zusammensetzungen des Standes der Technik. Entscheidend ist jedoch der Wassergehalt der erfindungsgemäßen Zusammensetzung, der nicht so hoch sein darf, daß die Zusammensetzung in der Spinnmasse als Fällungsmittel wirkt.

Als das tertiäre Aminoxid wird in der erfindungsgemäßen Zusammensetzung N-Methylmorpholin-N-oxid vorzugsweise verwendet.

In der erfindungsgemäßen Zusammensetzung ist ein Stabilisator für das tertiäre Aminoxid, insbesondere NaOH, ein Phosphat, ein Phosphonat oder Oxalsäure, vorgesehen.

In der erfindungsgemäßen Zusammensetzung kann als weiterer Stoff ein Dispergierhilfsmittel, insbesondere Polyvinylalkohol, Polyacrylsäure und deren Derivate, Polyalkylenoxid und dessen Derivate, Polyethylenimin und/oder Polyvinylpyrrolidon vorgesehen sein.

Als feste Teilchen kann in der erfindungsgemäßen Zusammensetzung ein Pigment vorgesehen sein.

Die Erfindung betrifft ferner ein verfahren zur Herstellung der erfindungsgemäßen Zusammensetzung, wobei feste Teilchen in ein flüssiges Lösungsmittel für Cellulose eingebracht und dispergiert werden, mit der Maßgabe, daß die Zusammensetzung keine Cellulose enthält.

Es kann auch ein Stabilisator für das Lösungsmittel und/oder ein Dispergierhilfsmittel eingebracht werden.

Die Erfindung betrifft auch ein Verfahren zur Herstellung einer formbaren Lösung von Cellulose in einem tertiären Aminoxid, das dadurch gekennzeichnet ist, daß die erfindungsgemäße Zusammensetzung in eine Lösung von Cellulose in einem tertiären Aminoxid eingebracht wird, wobei dies vorzugsweise kontinuierlich vorgenommen wird.

Cellulosische Formkörper können hergestellt werden, indem die erfindungsgemäße, formbare Lösung geformt und mit einem Fällungsmittel für Cellulose in Kontakt gebracht wird. Zum Formen wird bevorzugt eine Spinndüse zur Herstellung von Fasern oder eine Schlitzdüse zur Herstellung von Flach- oder Schlauchfolien eingesetzt.

Mit den nachfolgenden Beispielen werden bevorzugte Ausführungsformen der Erfindung noch näher erläutert, wobei mit den Beispielen 1 und 2 der Einfluß der Cellulose auf die Verfärbung der Lösung dokumentiert wird. Die Beispiele 3 bis 7 betreffen die Herstellung der erfindungsgemäßen Zusammensetzung, deren Zumischung zu einer formbaren Celluloselösung und die Herstellung von Cellulosefasern mit einem Titer von weniger als 2 dtex.

In den Beispielen sind sämtliche Prozentangaben Masse-%.

### Beispiel 1

Gemäß dem in der WO 96/27638 beschriebenen Verfahren wurden 554 g wässeriges NMMO (Wassergehalt: 83%), 11,3 g Cellulose (Solvekraft LV; Hersteller: International Paper) und 0,8 g Gallussäurepropylester als Stabilisator für die Cellulose in einem Behälter vorgelegt und unter Rühren auf 95°C erhitzt, bis die Cellulose gelöst war.

Während des Auflösens der Cellulose wurde eine Verfärbung beobachtet, deren Intensität folgendermaßen bestimmt wurde:

Die Lösung wurde abkühlen gelassen und anschließend in einer Labormühle gemahlen. 1,5 g abgekühlte und gemahlene Celluloselösung wurden in ein Becherglas eingewogen und mit 4,5 g Wasser versetzt, um die Cellulose zu fällen und die Farbkomponenten zu extrahieren. Anschließend wurden die festen Bestandteile abfiltriert und die wässerige Phase am Photometer bei 470 nm (1 cm schichtdicke) vermessen. Die Ergebnisse (Extinktionen) sind unten in der Tabelle angegeben.

### Beispiel 2

Ein Gemisch aus 554 g wässerigem NMMO (Wassergehalt: 83%, mit NaOH auf pH 12 gestellt) und 11,3 g Polyvinylalkohol (MG: 50.000; Aldrich Nr. 34,158-4) wurden in einem Behälter vorgelegt und unter Rühren auf 95°C erhitzt. Die Farbintensität der Lösung wurde analog zum Beispiel 1 vermessen. Die Ergebnisse sind unten in der Tabelle angegeben.

**Tabelle**

| Beispiel | Start | 1 Stunde | 18,5 stunden |
|---|---|---|---|
| 1 | 0,114 | 0,122 | 0,210 |
| 2 | 0,0437 | 0,0492 | 0,0455 |

Der Tabelle ist zu entnehmen, daß die Anwesenheit der Cellulose zu einer starken Verfärbung der Lösung führt.

### Beispiel 3

Mittels eines Rotor-Stator-Aggregates (Ultra-Turrax; Fa. IKA) wurde bei 25°C eine Dispersion mit folgender Zusammensetzung hergestellt:

| | |
|---|---|
| 30% | TiO₂ (Type 1047; Fa. Kronos) als Pigment, |
| 1% | Polyacrylsäure (FLUKA CHEMIKA; medium viscosity; Nr. 81140) als Dispergierhilfsmittel, und |
| 69% | wässeriges NMMO (13% Wasser; mit NaOH auf pH 12 gestellt). |

Mittels einer Kolbendosierpumpe wurde die erhaltene Dispersion mit einer Rate von 0,99 g/min zu 196 g/min einer cellulosischen Spinnmasse (15% Sulfitzellstoff; 75% NMMO; 10% H₂O) zudosiert. Nach Vergleichmäßigung der Pigmentverteilung in der Spinnmasse mit Hilfe eines Statikmischers (SMX DN40 mit 12 Mischelementen; Fa. Sulzer) wurde die mit TiO₂ versetzte, homogene Spinnmasse mit einer Temperatur von 120°C einer Spinndüse (3960 Loch; 100 µm) zugeführt und zu Fasern mit einem Titer von 1,7 dtex versponnen. Die erhaltenen Fasern wiesen einen Pigmentgehalt von 1% auf.

### Beispiel 4

Es wurde analog Beispiel 3 vorgegangen, wobei jedoch als Dispergierhilfsmittel Polyvinylalkohol (MG 50.000; ALDRICH Nr. 34,158-4) eingesetzt wurde.

Auch diese Spinnmasse konnte problemlos versponnen werden.

### Beispiel 5

Es wurde analog Beispiel 3 vorgegangen, wobei jedoch als Dispergierhilfsmittel Polyacrylamid (ALDRICH Nr. 18,127-7) eingesetzt wurde.

Auch diese Spinnmasse konnte problemlos versponnen werden.

### Beispiel 6

Mittels des in Beispiel 3 eingesetzten Rotor-Stator-Aggregates wurde bei 80°C eine Dispersion mit folgender Zusammensetzung hergestellt:

| | |
|---|---|
| 20% | Ruß (Printex 3007; Fa. Kronos) als Pigment, |
| 1% | polyoxalkylierter Polyalkylaminoalkohol (Hypermer PS 2, Fa. ICI) als Dispergierhilfsmittel, |
| 78,9% | wässeriges NMMO (13% Wasser), und |
| 0,1% | Oxalsäure. |

Mittels einer Kolbendosierpumpe wurde die erhaltene Dispersion mit einer Rate von 7,42 g/min zu 188 g/min einer cellulosischen Spinnmasse (15% Sulfitzellstoff; 75% NMMO; 10% H₂O) zudosiert. Nach Vergleichmäßigung der Pigmentverteilung in der Spinnmasse mit Hilfe des in Beispiel 3 genannten Statikmischers wurde die mit Ruß versetzte, homogene Spinnmasse mit einer Temperatur von 120°C einer Spinndüse (3960 Loch; 100 µm) zugeführt und zu Fasern mit einem Titer von 1,7 dtex versponnen. Die erhaltenen Fasern wiesen einen Rußgehalt von 5% auf.

### Beispiel 7

Mittels des in Beispiel 3 eingesetzten Rotor-Stator-Aggregates wurde eine Dispersion mit folgender Zusammensetzung hergestellt:

| | |
|---|---|
| 30% | Antimonpentoxid (Nyacol ZTA; Fa. PQ Corporation) als Pigment |
| 1% | polyoxalkylierter Polyalkylaminoalkohol (Hypermer PS 2, Fa. ICI) als Dispergierhilfsmittel, |
| 68,9% | wässeriges NMMO (13% Wasser), und |
| 0,1% | 1-Hydroxyethyliden-1,1-diphosphansäure. |

Mittels einer Kolbendosierpumpe wurde die erhaltene Dispersion mit einer Rate von 19,8 g/min zu 158 g/min einer cellulosischen Spinnmasse (15% Sulfitzellstoff; 75% NMMO; 10% H₂O) zudosiert. Kolbendosierpumpe und Dispersionszuführung wurden auf einer Temperatur von 80°C gehalten.

Nach Vergleichmäßigung der Pigmentverteilung in der Spinnmasse mit Hilfe des in Beispiel 3 genannten statikmischers wurde die mit Antimonpentoxid versetzte, homogene Spinnmasse mit einer Temperatur von 120°C einer Spinndüse (3960 Loch; 100 µm) zugeführt und zu Fasern mit einem Titer von 1,7 dtex versponnen. Die erhaltenen Fasern wiesen einen Antimonpentoxidgehalt von 20% auf.

## Patentansprüche

1. Zusammensetzung zur Zumischung zu einer formbaren Lösung von Cellulose in einem wässerigen tertiären Aminoxid, bestehend aus
- festen Teilchen,
- einem Gemisch aus einem tertiären Aminoxid und Wasser, in welchem die festen Teilchen dispergiert sind,
- einem Stabilisator für des tertiäre Aminoxid
- und gegebenenfalls einem weiteren Stoff,
mit der Maßgabe, daß die festen Teilchen und dieser gegebenfalls eine weitere Stoff nicht Cellulose sind, und daß der Gehalt an Wasser derart ist, daß bei Zumischung der Zusammensetzung zur formbaren Celluloselösung keine Cellulose ausfällt.

2. Zusammensetzung nach Anspruch 1, **dadurch gekennzeichnet, daß** das tertiäre Aminoxid N-Methylmorpholin-N-oxid ist.

3. Zusammensetzung nach Anspruch 1 oder 2, **dadurch gekennzeichnet, daß** als Stabilisator NaOH, ein Phosphat, ein Phosphonat oder Oxalsäure vorgesehen ist.

4. Zusammensetzung nach einem der Ansprüche 1 bis 3, **dadurch gekennzeichnet, daß** als zusätzlicher weiterer Stoff ein Dispergierhilfsmittel vorgesehen ist.

5. Zusammensetzung nach Anspruch 4, **dadurch gekennzeichnet, daß** als Dispergierhilfsmittel Polyvinylalkohol, Polyacrylsäure und deren Derivate, Polyalkylenoxid und dessen Derivate, Polyethylenimin und/oder Polyvinylpyrrolidon vorgesehen ist.

6. Zusammensetzung nach einem der Ansprüche 1 bis 5, **dadurch gekennzeichnet, daß** als feste Teilchen ein Pigment vorgesehen ist.

7. Verfahren zur Herstellung einer Zusammensetzung gemäß einem der Ansprüche 1 bis 6, wobei feste Teilchen in ein flüssiges Lösungsmittel für Cellulose, enthaltend ein tertiäres Aminoxid, Wasser und einen Stabilisator für das tertiäre Aminoxid, eingebracht und dispergiert werden, mit der Maßgabe, daß die Zusammensetzung keine Cellulose enthält.

8. Verfahren nach Anspruch 7, **dadurch gekennzeichnet, daß** auch ein Dispergierhilfsmittel eingebracht werden.

9. Verfahren zur Herstellung einer formbaren Lösung von Cellulose in einem tertiären Aminoxid, **dadurch gekennzeichnet, daß** eine Zusammensetzung nach einem der Ansprüche 1 bis 6 in eine Lösung von Cellulose in einem tertiären Aminoxid eingebracht wird.

10. Verfahren nach Anspruch 9, **dadurch gekennzeichnet, daß** es kontinuierlich durchgeführt wird.

11. Verfahren zur Herstellung cellulosischer Formkörper, **dadurch gekennzeichnet, daß** eine gemäß einem der Ansprüche 9 bis 10 erhältliche Lösung geformt und mit einem Fällungsmittel für Cellulose in Kontakt gebracht wird.

12. Verfahren nach Anspruch 11 zur Herstellung cellulosischer Fasern, **dadurch gekennzeichnet, daß** die Lösung mittels einer Spinndüse geformt und nach dem Trocken/Naß-Spinnverfahren zu den Fasern verarbeitet wird.

13. Verfahren nach Anspruch 11 zur Herstellung cellulosischer Flach- oder Schlauchfolien, **dadurch gekennzeichnet, daß** die Lösung mittels einer Schlitzdüse geformt und nach dem Trocken/Naß-Spinnverfahren zu den Folien verarbeitet wird.

## Claims

1. A composition intended to be admixed to a moldable solution of cellulose in an aqueous tertiary amine oxide, which composition consists of
- solid particles,
- a mixture of a tertiary amine oxide and water, in which the solid particles are dispersed,
- a stabilizer for the tertiary amine oxide,
- and optionally a further substance,
with the proviso that the solid particles and said optionally further substance are different from cellulose and that the content of water is such that no cellulose will precipitate when admixing the composition to the moldable cellulose solution.

2. A composition according to claim 1, **characterized in that** the tertiary amine oxide is N-methylmorpholine-N-oxide.

3. A composition according to claim 1 or 2, **characterized in that** NaOH, a phosphate, a phosphonate or oxalic acid is provided as said stabilizer.

4. A composition according to any of claims 1 to 3, **characterized in that** a dispersion assisting agent is provided as an additional further substance.

5. A composition according to claim 4, **characterized in that** polyvinyl alcohol, polyacrylic acid and its derivatives, polyalkylene oxide and its derivatives, polyethylene imine and/or polyvinyl pyrrolidone is provided as said dispersion assisting agent.

6. A composition according to any of claims 1 to 5, **characterized in that** a pigment is provided as solid particles.

7. A process for preparing a composition according to any of claims 1 to 6, wherein solid particles are introduced into, and dispersed in, a liquid solvent for cellulose containing a tertiary amine oxide, water and a stabilizer for the tertiary amine oxide, with the proviso that the composition does not contain any cellulose.

8. A process according to claim 7, **characterized in that** also a dispersion assisting agent is introduced.

9. A process for preparing a moldable solution of cellulose in a tertiary amine oxide, **characterized in that** a composition according to any of claims 1 to 6 is introduced into a solution of cellulose in a tertiary amine oxide.

10. A process according to claim 9, **characterized in that** it is carried out continuously.

11. A process for producing cellulosic molded bodies, **characterized in that** a solution obtainable according to any of claims 9 to 10 is molded and contacted with a cellulose precipitating agent.

12. A process according to claim 11 for producing cellulosic fibers, **characterized in that** the solution is molded by means of a spinneret and processed to fibers according to the dry/wet spinning process.

13. A process according to claim 11 for producing cellulosic flat or tubular films, **characterized in that** the solution is molded by means of a slitted spinneret and processed to films according to the dry/wet spinning process.

## Revendications

1. Composition pour le mélange à une solution de cellulose pouvant être formée dans un oxyde d'amine tertiaire aqueux, se composant de
particules solides,
un mélange d'un oxyde d'amine tertiaire et d'eau, dans lequel les particules solides sont dispersées,
un stabilisateur pour l'oxyde d'amine tertiaire,
et le cas échéant une substance supplémentaire,
à condition que les particules solides et cette substance supplémentaire le cas échéant ne soient pas de la cellulose, et que la teneur en eau soit telle que lors du mélange de la composition à la solution de cellulose aucune cellulose ne précipite.

2. Composition selon la revendication 1, **caractérisée en ce que** l'oxyde d'amine tertiaire est le N-oxyde de N-méthylmorpholine.

3. Composition selon la revendication 1 ou 2, **caractérisée en ce que** l'on prévoit comme stabilisateur du NaOH, un phosphate, un phosphonate ou de l'acide oxalique.

4. Composition selon l'une quelconque des revendications 1 à 3, **caractérisée en ce que** l'on prévoit comme substance supplémentaire ajoutée un auxiliaire dispersant.

5. Composition selon la revendication 4, **caractérisée en ce que** l'on prévoit comme auxiliaire dispersant de l'alcool polyvinyle, de l'acide polyacrylique et des dérivés de ceux-ci, de l'oxyde polyalkylénique et des dérivés de celui-ci, de la polyéthylènimine et/ou de la polyvinylpyrrolidone.

6. Composition selon l'une quelconque des revendications 1 à 5, **caractérisée en ce que** l'on prévoit un pigment comme particules solides.

7. Procédé de préparation d'une composition selon l'une quelconque des revendications 1 à 6, des particules solides dans un solvant liquide pour la cellulose, contenant un oxyde d'amine tertiaire, de l'eau et un stabilisateur pour l'oxyde d'amine tertiaire étant introduites et dispersées, à condition que la composition ne contienne pas de cellulose.

8. Procédé selon la revendication 7, **caractérisé en ce que** l'on introduit aussi un auxiliaire dispersant.

9. Procédé de préparation d'une solution de cellulose pouvant être formée dans un oxyde d'amine tertiaire, **caractérisé en ce qu'**une composition selon l'une quelconque des revendications 1 à 6 est introduite dans une solution de cellulose dans un oxyde d'amine tertiaire.

10. Procédé selon la revendication 9, **caractérisé en ce qu'**il est réalisé de façon continue.

11. Procédé de préparation de formes cellulosiques, **caractérisé en ce que** l'on forme une solution obtenue selon l'une quelconque des revendications 9 à 10 et que l'on la met en contact avec un agent précipitant pour la cellulose.

12. Procédé selon la revendication 11 pour la préparation de fibres cellulosiques, **caractérisé en ce que** la solution est formée au moyen d'une filière et transformée en fibres après le procédé de séchage/filage humide.

13. Procédé selon la revendication 11 pour la préparation de feuilles planes ou tubulaires cellulosiques, **caractérisé en ce que** la solution est formée au moyen d'une filière à orifice plat et transformée en feuilles après le procédé de séchage/filage humide.
